# EUROPEAN PATENT SPECIFICATION

(11) **EP 1 829 916 B1**
(45) Date of publication and mention of the grant of the patent: **22.07.2009**
(21) Application number: 05811761.5
(22) Date of filing: 01.12.2005
(51) Int. Cl.: C08J 7/00, C08L 23/08, C08L 27/18

(54) **ETHYLENE-TETRAFLUOROETHYLENE COPOLYMER MOLDING AND PROCESS FOR PRODUCING THE SAME**
ETHYLEN-TETRAFLUORETHYLEN-COPOLYMER-FORMKÖRPER UND HERSTELLUNGSVERFAHREN DAFÜR
MOULAGE DE COPOLYMÈRE ÉTHYLÈNE-TÉTRAFLUOROÉTHYLÈNE ET PROCÉDÉ DE PRODUCTION DUDIT MOULAGE

(30) Priority: 03.12.2004 JP 2004351699
(43) Date of publication of application: 05.09.2007
(73) Proprietor: Asahi Glass Company, Limited, Chiyoda-ku, Tokyo 100-8405 (JP)
(72) Inventor: HIGASHI, Seiji, c/o Asahi Glass Company, Limited, Yokohama-shi, Kanagawa 2218755 (JP); TAMITSUJI, Chikaya, c/o Asahi Glass Company, Ltd., Yokohama-shi, Kanagawa 2218755 (JP); TATEMATSU, Shin, c/o Asahi Glass Company, Limited, Yokohama-shi, Kanagawa 2218755 (JP)
(74) Representative: Müller-Boré & Partner Patentanwälte
(86) International application number: PCT/JP2005/022122
(87) International publication number: WO 2006/059697

(56) References cited:
- JP-A- 5 043 721
- JP-A- 6 285 988
- JP-A- 7 102 090
- US-A- 6 057 414
- DATABASE WPI Week 199313 Thomson Scientific, London, GB; AN 1993-104393 XP002491143 -& JP 05 043721 A (TORAY IND INC) 23 February 1993 (1993-02-23)
- DATABASE WPI Week 198636 Thomson Scientific, London, GB; AN 1986-236323 XP002491144 -& JP 61 166841 A (JAPAN SYNTHETIC RUBBER CO LTD) 28 July 1986 (1986-07-28)

## Description

### TECHNICAL FIELD

The present invention relates to an ethylene/tetrafluoroethylene copolymer molding having the surface hydrophilized, and a method for its production.

### BACKGROUND ART

An ethylene/tetrafluoroethylene copolymer (hereinafter referred to as ETFE) is an excellent polymer having weather resistance and chemical resistance inherent to a fluororesin and flexibility inherent to a hydrocarbon polymer. Accordingly, ETFE is widely used as a material for e.g. an exterior film for system kitchens, a surface film of a white board for marker pens, a die molding film or an outdoor film.

Since ETFE is a fluororesin, the surface energy is low, and therefore a contact angle to water (hereinafter referred to as a water contact angle) is usually 100° or higher. Accordingly, water droplets tend to be formed on the surface. Therefore, in a case where an ETFE film is used for e.g. a green house for agriculture, the film is likely to be fogged up with water droplets condensed on the ETFE film, or water droplets may drop, whereby there has been a problem that crop plants are damaged.

Heretofore, it is well known that the water wettability or the adhesion property is improved by exposing the surface of a fluororesin such as ETFE to corona discharge or low-temperature plasma discharge gas. For example, the following Patent Document 1 discloses a method for improving the adhesion property and the wettability of a fluororesin by treating the surface of the fluororesin with a low-temperature plasma in a mixed gas of hydrogen/nitrogen. The surface modification of PTFE (polytetrafluoroethylene) was carried out by means of such a method, and as a result it is shown that the water contact angle decreased to 44°.

Further, it is shown in Comparative Example 10 in the following Patent Document 2 that ETFE was subjected to discharge treatment with a mixed gas of argon:ethylene:oxygen (molar ratio) = 100:7:3 under the atmospheric pressure, whereby the water contact angle on the surface of ETFE became 75°. Further, it is disclosed in Table 3 of the following Patent Document 3 that ETFE was treated by means of an atmospheric pressure glow plasma method in a helium gas atmosphere, whereby the water contact angle on the surface of an ETFE sheet decreased to 30.6°.

As a method for hydrophilization of a fluororesin such as ETFE, in addition to the discharge treatment, the following Patent Document 4 discloses a method of coating the surface with an inorganic oxide in a liquid-phase, to form a gelation layer of the inorganic oxide on the surface. However, such a method requires steps of such a liquid-phase coating and drying, and the operation is cumbersome, and further the inorganic compound is formed on an organic film, whereby there will be a problem in durability.

It is disclosed in the following Patent Document 5 that the ETFE surface is treated with corona discharge treatment, then an antifogging agent containing silica and a modified hydrophilic polymer compound having a silyl group and an ionic hydrophilic group is applied thereon, followed by heat treatment, whereby the water contact angle on the ETFE surface can be made to 6°. However, such a method requires many steps and the operation is cumbersome, such being undesirable from the viewpoint of the production cost.
Patent Document 1: JP-A-6-220231
Patent Document 2: JP-A-10-273546
Patent Document 3: JP-A-5-309787
Patent Document 4: JP-A-8-85186
Patent Document 5: JP-A-9-76428

### DISCLOSURE OF THE INVENTION

### PROBLEMS THAT THE INVENTION IS TO SOLVE

As mentioned above, as a method for hydrophilization of the ETFE surface, a method employing the discharge treatment is simple in its operation, as compared with a method of applying the liquid-phase. However, the conventional method employing the discharge treatment had a problem such that it is impossible to achieve high-level hydrophilization which is sufficient for obtaining good anti-fog properties.

Namely, for the purpose of improving e.g. the adhesion property of the surface of an ETFE sheet, the conventional method by means of the discharge treatment may be employed, but for the purpose of satisfying the anti-fog property which is required for an agricultural film, it is preferred to carry out hydrophilization so that the water contact angle on the surface would be at a level of at most 20°. Further, when the water contact angle is at most 10°, water droplets are unlikely to be formed, such being more preferred.

The present invention provides an ETFE molding, and a method for producing the ETFE molding in which the operation for the production is simple, and the surface can be highly hydrophilized.

### MEANS TO SOLVE THE PROBLEMS

In order to solve the above problems, the method for producing an ETFE molding of the present invention is characterized by applying discharge treatment to a surface of a molding to be treated, under reduced pressure in a mixed gas containing oxygen and a hydrocarbon, said surface being made of a material comprising an ethylene/tetrafluoroethylene copolymer as the main component.

It is preferred that the above hydrocarbon has from 1 to 4 carbon atoms.

The ETFE molding of the present invention is characterized in that, in a surface of the ETFE molding, the atomic ratio of oxygen atoms to the carbon atoms (the number of oxygen atoms/the number of carbon atoms) is at least 0.25.

### EFFECT OF THE INVENTION

According to the present invention, it is possible to obtain an ETFE molding having its surface highly hydrophilized by a simple operation for the production.

### BRIEF DESCRIPTION OF THE DRAWING

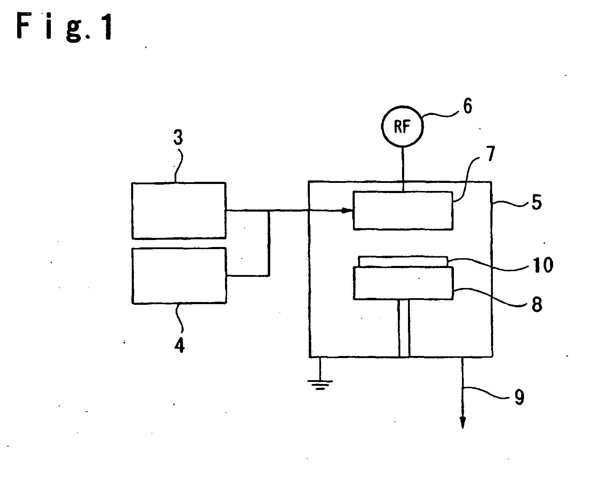

Fig. 1 is a schematic structural view showing an example of the apparatus to be used for the discharge treatment of the present invention.

### DESCRIPTION OF SYMBOLS

- 3:: Means to supply hydrocarbon gas
- 4:: Means to supply oxygen gas
- 5:: Vacuum chamber
- 6:: High frequency power source
- 7:: Upper shower head electrode
- 8:: Lower electrode
- 9:: Means for evacuation

### BEST MODE FOR CARRYING OUT THE INVENTION

### METHOD FOR PRODUCING ETFE MOLDING

The molding to be treated in the present invention is a molding having a surface being made of a material comprising ETFE as the main component.

In the present invention, "comprising ETFE as the main component" means that the content of ETFE is at least 50 mass%. ETFE may be 100 mass%.

The molding to be treated, may be a molding wherein the entire molding is made of a material comprising ETFE as the main component. Otherwise, in a case where the material comprising ETFE as the main component and other materials are used in combination, part or all of the surface may be a material comprising ETFE as the main component.

The shape of the molding to be treated is not particularly limited, but may, for example, be a film form, sheet form, tube form, pipe form or fibrous. Particularly preferred is a film form or sheet form.

For example, in a case where the molding to be treated is in a film form or sheet form comprising ETFE as the main component, the discharge treatment may be conducted on either one or both of the two sides.

In this specification, in the obtained ETFE molding, the ETFE surface subjected to the discharge treatment, is referred to as "the treated surface".

In the above ETFE, the molar ratio of polymerized units based on tetrafluoroethylene/polymerized units based on ethylene, is preferably from 30/70 to 70/30, more preferably from 45/55 to 65/35, most preferably from 50/50 to 65/35. If the molar ratio of polymerized units based on tetrafluoroethylene/polymerized units based on ethylene is too low, e.g. the solvent resistance, release properties or heat resistance deteriorates, and if such a molar ratio is too high, e.g. the mechanical strength or melt moldability deteriorates. When the molar ratio is within such a range, ETFE is excellent in the solvent resistance, release properties, heat resistance, mechanical strength, melt moldability, etc.

Further, it is also preferred that ETFE contains polymerized units based on other monomers other than tetrafluoroethylene and ethylene. Such other monomers may, for example, be a fluoroolefin other than tetrafluoroethylene, such as vinylidene fluoride, hexafluoropropylene, CH₂=CH(CF₂)₄F or CH₂=CF(CF₂)₅F, a perfluoro (alkyl vinyl ether) such as CF₂=CFO(CF₂)₃F, a hydrocarbon olefin other than ethylene, such as propylene or butene, a vinyl ester such as vinyl acetate or vinyl pivalate, and a (meth)acrylate such as a (polyfluoroalkyl)acrylate or a (polyfluoroalkyl)methacrylate. Such other monomers may be used alone or in combination as a mixture of two or more of them.

Such other monomers are more preferably hexafluoropropylene, CH₂=CH(CF₂)₄F and CF₂=CFO(CF₂)₃F, most preferably CH₂=CH(CF₂)₄F.

The content of polymerized units based on such other monomers is preferably from 0.01 to 10 mol%, more preferably from 0.1 to 7 mol%, most preferably from 0.5 to 5 mol%, based on the total polymerized units in ETFE.

In the present invention, a material comprising ETFE as the main component (hereinafter referred to as "ETFE material") may be made of ETFE alone, or may be made of a mixture of ETFE with other fluororesins such as resins of a hexafluoropropylene/tetrafluoroethylene copolymer, a perfluoro(alkyl vinyl ether)/tetrafluoroethylene copolymer, a tetrafluoroethylene/hexafluoropropylene/vinylidene fluoride copolymer and a chlorotrifluoroethylene/ethylene copolymer, or a mixture of ETFE with resins other than the fluororesins.

Such other fluororesins or resins other than the fluororesins may be used alone or in combination as a mixture of two or more of them. In a case where such other fluororesins or resins other than the fluororesin are used in combination, the portion of ETFE to be compounded is usually preferably at least 50 mass%.

Further, the ETFE material may contain at least one of fillers and additives such as a pigment, an ultraviolet absorber, carbon black, carbon fiber, silicon carbide, glass fiber, mica and a cross-linking agent.

The mixed gas of the present invention contains oxygen and a hydrocarbon.

As the hydrocarbon, it is possible to use either a saturated hydrocarbon or an unsaturated hydrocarbon, but the hydrocarbon is not particularly limited thereto. In order to highly hydrophilize the surface made of the ETFE material (hereinafter referred to as "ETFE surface"), a C₁₋₄ hydrocarbon is more preferred. As a specific example, methane, ethane, propane, butane, ethylene or propylene may, for example, be mentioned. Particularly, it is preferred to use a hydrocarbon having at most 2 carbon atoms, such as methane or ethylene, and it is particularly preferred to use ethylene.

The ratio of oxygen and a hydrocarbon in the mixed gas is not particularly limited, but in order to highly hydrophilize the ETFE surface, the ratio of the number of oxygen atoms to the number of carbon atoms (the number of oxygen atoms/the number of carbon atoms) contained in the mixed gas, is preferably from 0.2 to 3.0.

In addition to oxygen and a hydrocarbon, the mixed gas may contain an inert gas such as argon, helium or neon, or another gas such as nitrogen, carbon monoxide, carbon dioxide, hydrogen or an alcohol such as methanol or ethanol. Such another gas is more preferably nitrogen or carbon dioxide. In a case where carbon dioxide and/or nitrogen is used as such another gas, it is possible to lower coloration of the film formed even when the electrical power density at the time of the discharge treatment is controlled to be high. Accordingly, in the case where carbon dioxide and/or nitrogen is contained in the mixed gas, it is possible to form the hydrophilized ETFE surface with low coloration and excellent durability, such being preferred.

In a case where such another gas is contained in the mixed gas, in order to highly hydrophilize the ETFE surface, the total content of oxygen and the hydrocarbon in the mixed gas is preferably at least 10 mol%, more preferably from 30 to 50 mol%.

The method for the discharge treatment of the present invention is not particularly limited, but corona discharge (spark discharge) or glow discharge may, for example, be applied. The glow discharge is more preferred. In either discharge treatment, the surface to be treated is exposed in a gas atmosphere, followed by applying high frequency voltage between electrodes.

In the production method of the present invention, the electrical power density at the time of the discharge treatment is preferably from 0.1 to 4.0 W/cm², more preferably from 1.0 to 2.5 W/cm². The electrical power density represents a value obtained by dividing the electrical power at the time of the discharge by the area of the electrode. When the electrical power density is the above lower limit or higher, it is possible to form a hydrophilized ETFE surface excellent in the durability, such being preferred. Further, when the electrical power density is the above upper limit or lower, it is possible to lower the damage to the ETFE surface due to the discharge, such being preferred.

The discharge treatment is conducted under reduced pressure. Namely, the pressure for the discharge treatment is set to be lower than atmospheric pressure.

The pressure for the discharge treatment in the present invention is preferably at most 10⁴Pa, more preferably at most 10³Pa. The lower limit of the pressure for the discharge treatment is not particularly limited, but may be within a range where the excellent discharge is conducted, and for example, such a lower limit is at least 1 Pa.

According to the production method of the present invention, it is possible to obtain an ETFE molding in which the ETFE surface of the molding to be treated is hydrophilized in such a simple operation that the ETFE surface of the molding to be treated is subjected to the discharge treatment under reduced pressure in a specific mixed gas. For example, it is possible to obtain a highly hydrophilized ETFE molding in which the surface to be treated has a water contact angle of at most 20°. When the water contact angle is at most 20°, it is possible to obtain a good anti-fogging performance.

Further, it is possible to obtain an ETFE molding having the ultra hydrophilic surface on which the water contact angle is at most 10°, depending upon production conditions. When the water contact angle is at most 10°, it is possible to obtain a more suitable antifogging performance.

The reason is not clearly understood, but it is considered that the reaction of the mixed gas and the ETFE surface in the present invention is carried out in such a manner that some of CF₂ groups or CH₂ groups on the ETFE surface are decomposed at the time of discharge treatment in the presence of the mixed gas, and hydrophilic groups formed by the discharge reaction of hydrocarbon and oxygen are subjected to graft polymerization therewith.

Further, as mentioned above, the hydrocarbon is preferably a C₁₋₄ low molecular compound, since the low molecular compound can readily be ionized, and the reaction in which hydrophilic groups formed by the reaction with oxygen are introduced to the ETFE surface, takes place more readily than the reaction in which alkyl groups are polymerized on the ETFE surface.

Further, as mentioned above, the value of the number of oxygen atoms/the number of carbon atoms in the mixed gas preferably falls in the above range, since if the number of oxygen atoms is too large, ozone is likely to be generated in plasma at the time of discharge treatment thereby to facilitate breakdown of the hydrophilic groups. On the other hand, if the number of carbon atoms is too large, the reaction in which water-repellent alkyl groups are polymerized on the ETFE surface, takes place more readily than the reaction in which the hydrophilic groups are introduced to the ETFE surface.

### ETFE MOLDING

The atomic ratio of oxygen atoms to carbon atoms (the number of oxygen atoms/the number of carbon atoms) is at least 0.25 on the surface of the ETFE molding of the present invention.

In this specification, "the atomic ratio of oxygen atoms to carbon atoms on the surface" represents a value obtained in such a manner that the top surface layer portion of the treated surface is measured by an X-ray photoelectron spectrometry (XPS, MODEL15500, manufactured by PERKIN ELEMER-PHI) using 300W of monochromatic AlKα-ray as the X-ray source, with a photoelectron detection area of 0.8 mm in diameter, at a photoelectron detection angle of 70° and with a pass energy of 93.9 eV, and the wide spectra thereby obtained are observed to observe 1s peaks of oxygen and carbon, whereupon their respective atomic ratios are calculated.

The higher the above atomic ratio of oxygen atoms to carbon atoms (the number of oxygen atoms/the number of carbon atoms), the better, but the upper limit is preferably 2.0. The atomic ratio of oxygen atoms to carbon atoms is more preferably from 0.26 to 0.45.

The ETFE molding of the present invention can be produced by the method for producing an ETFE molding of the present invention.

The above ratio of the number of oxygen atoms/the number of carbon atoms on the ETFE surface of the molding to be treated before discharge treatment, is theoretically 0. Namely, when the value of the number of oxygen atoms/the number of carbon atoms on the treated surface is higher than 0, this means that the oxygen atoms which are not present on the ETFE surface of the molding to be treated are introduced. Thus, it is considered that as a result that functional groups with hydrophilic groups are introduced to the ETFE surface, the hydrophilicity on the ETFE surface is improved.

The ETFE molding of the present invention is especially useful for applications which require both light transmission properties and antifogging properties, such as applications for agriculture or solar batteries.

### EXAMPLES

Now, the present invention will be described in detail with reference to Examples but it should be understood that the present invention is not limited thereto.

Fig. 1 is a schematic structural view of an apparatus used in Examples below. The apparatus in this case is schematically composed as follows.

In a vacuum chamber 5, an upper shower head electrode 7 and a lower electrode 8 made of parallel flat plate electrodes are provided so as to face each other. A high-frequency power source 6 with 13.56 MHz is connected to the upper shower head electrode 7, and the lower electrode 8 is earthed, whereby the electrodes 7 and 8 are designed to generate the low temperature plasma between said electrodes 7 and 8. On the surface of the lower electrode 8, facing the upper shower head electrode 7, the molding 10 to be treated is fixed so as to be detachable. The above shower head electrode 7 serves also as a means to supply gases, and to the upper shower head electrode 7, a means to supply hydrocarbon gas 3 provided with a mass flow controller and a means to supply oxygen gas 4 provided with a mass flow controller, are connected. On the surface of the upper shower head electrode 7, facing the lower electrode 8, a plurality of gas ejection holes are provided, whereby it is possible to supply shower gas to the molding 10 to be treated on the lower electrode 8. Symbol 9 in the Fig. represents a means for evacuation provided with a vacuum pump. EXAMPLES 1 to 19 and COMPARATIVE EXAMPLES 1 to 3

By using the apparatus in Fig. 1, surface treatment of the ETFE film (molding to be treated) was conducted.

First, the ETFE film (molding to be treated) with a size of 5 x 5 cm and a thickness of 50 µm was provided on the lower electrode 8 (area: 78.5 cm²), and the interior of the vacuum chamber 5 was evacuated to be 0.1 Pa or lower by a vacuum pump. Then, the distance between the upper shower head electrode 7 and the lower electrode 8 was adjusted to 3 cm, and then the discharge treatment was conducted while the mixed gas containing a hydrocarbon and oxygen was injected from the upper shower head electrode 7 under the conditions shown in Table 1. Then, the interior of the vacuum chamber 5 was purged with air, and then the ETFE film (ETFE molding) subjected to discharge treatment was taken out. The water contact angle on the treated surface of the ETFE film obtained was measured by a contact-angle measuring apparatus (Product Name: CA-X150, manufactured by KYOWA INTERFACE SCIENCE CO., LTD.). The results are shown in Table 1.

In Table 1, "O/C in mixed gas" represents the ratio of the number of oxygen atoms to the number of carbon atoms in a mixed gas.

Further, with regard to the ETFE film obtained in each of Examples 3, 5, 16 and 17 and Comparative Example 1, and the untreated ETFE film which was subjected to no surface treatment, the atomic ratio of the number of oxygen atoms to the number of carbon atoms on the surface (the number of oxygen atoms/the number of carbon atoms on the surface) was measured by using XPS. The results are shown in Table 1.

### COMPARATIVE EXAMPLE 4

The same ETFE film as used in Example 1 was subjected to a surface treatment method by means of an atmospheric glow plasma method in a helium gas atmosphere as one of the conventional methods. Namely, using the apparatus in Fig. 1, the interior of the chamber was evacuated to 0.1 Pa or lower and then supplied with helium so as to be an atmospheric pressure (10⁵ Pa). Then, the supply of helium was terminated, and discharge treatment was applied to the ETFE film surface at an output of 200 W for 30 seconds by a high-frequency power source with a frequency of 13.56 MHz. A water contact angle of the ETFE film obtained was measured in the same manner as in Example 1. The results are shown in Table 1.

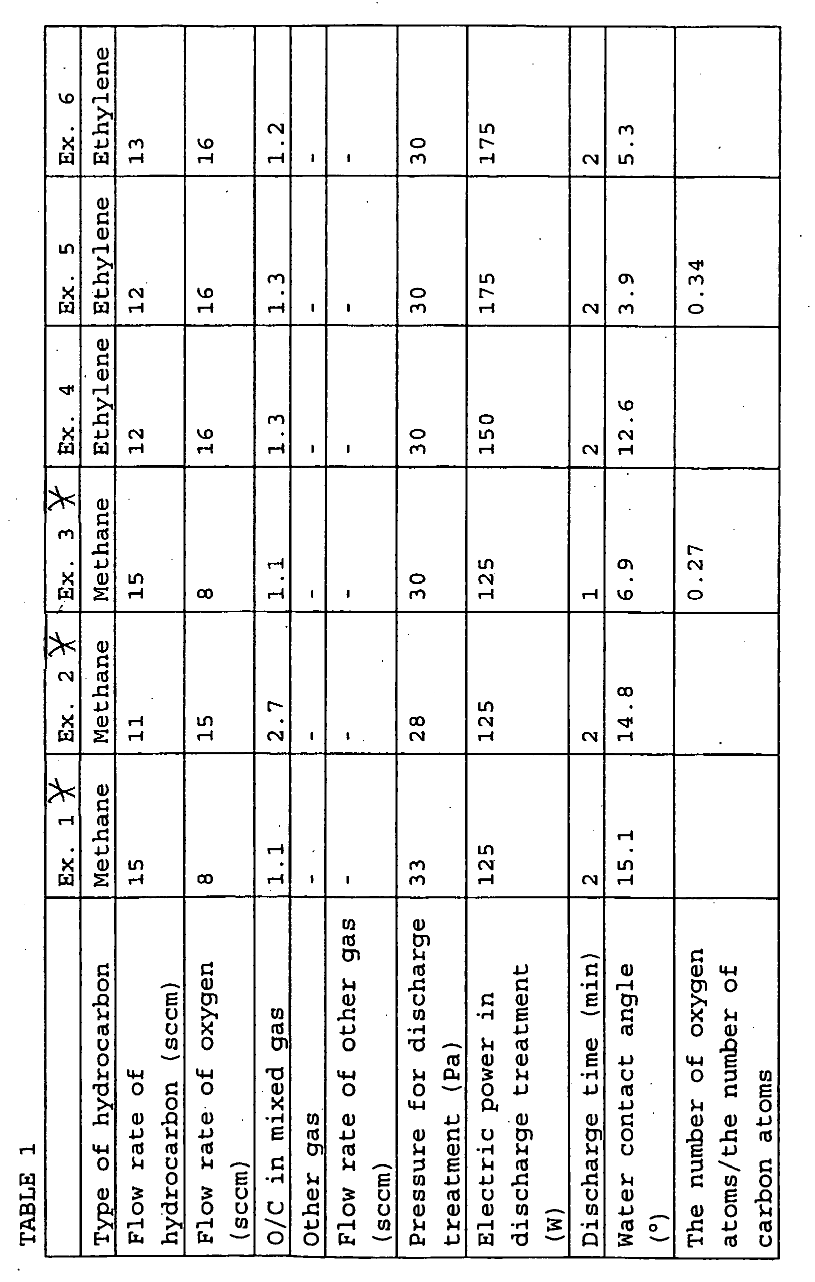

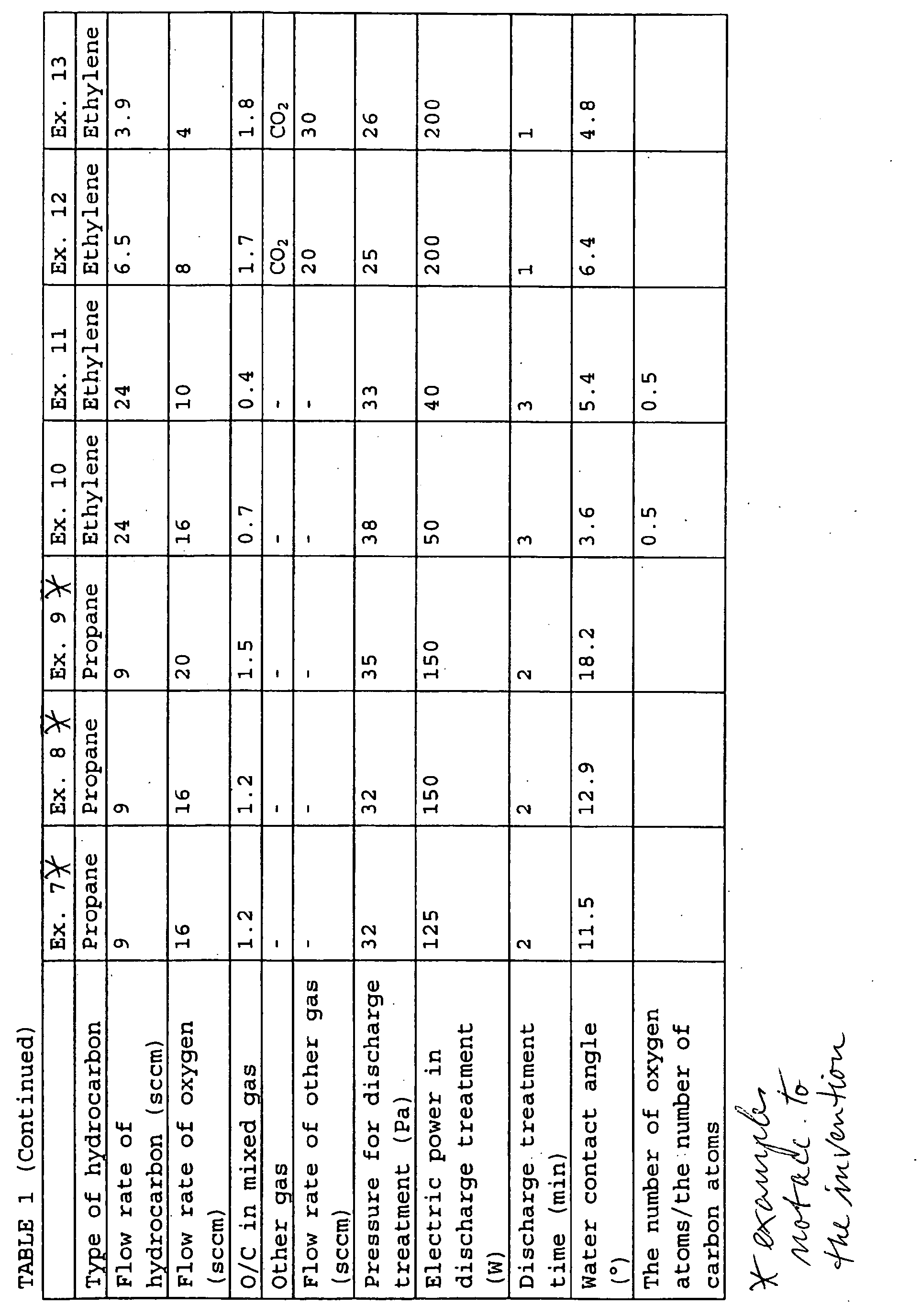

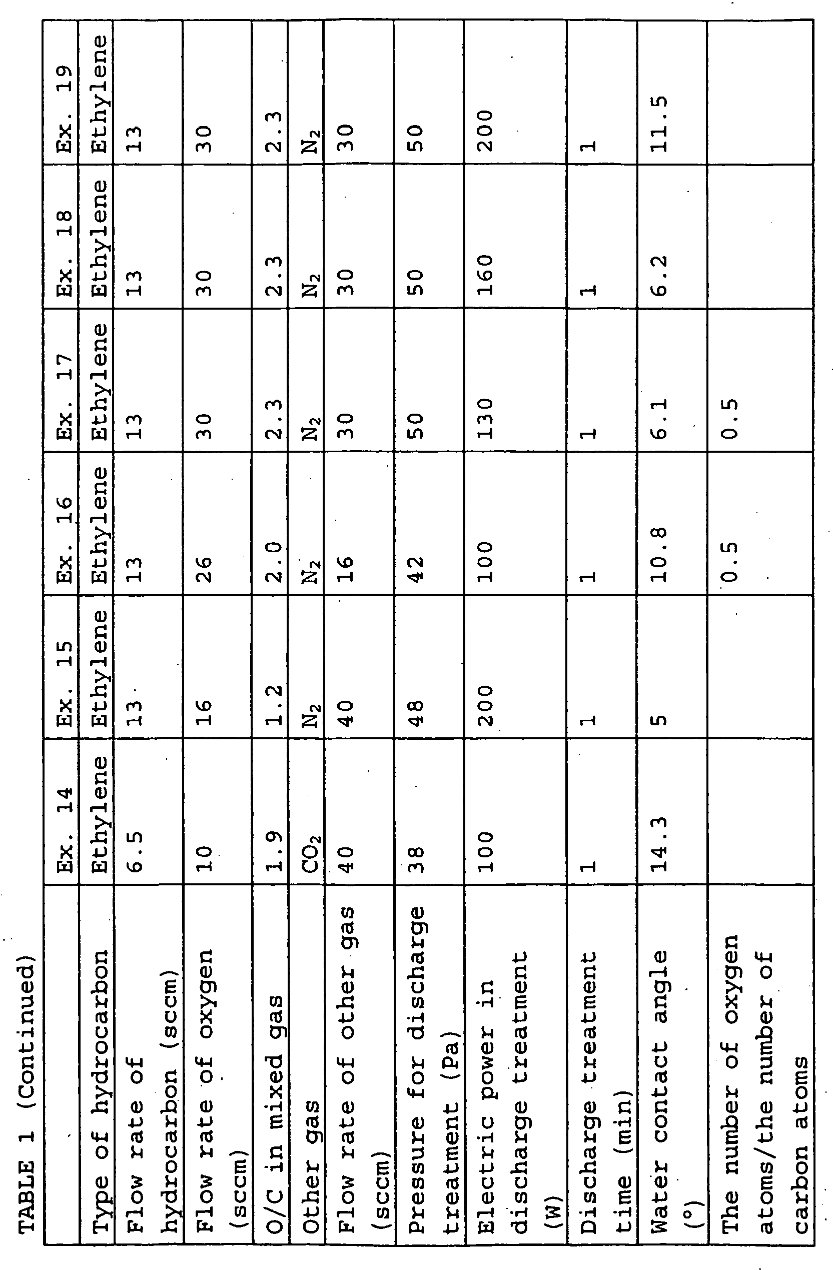

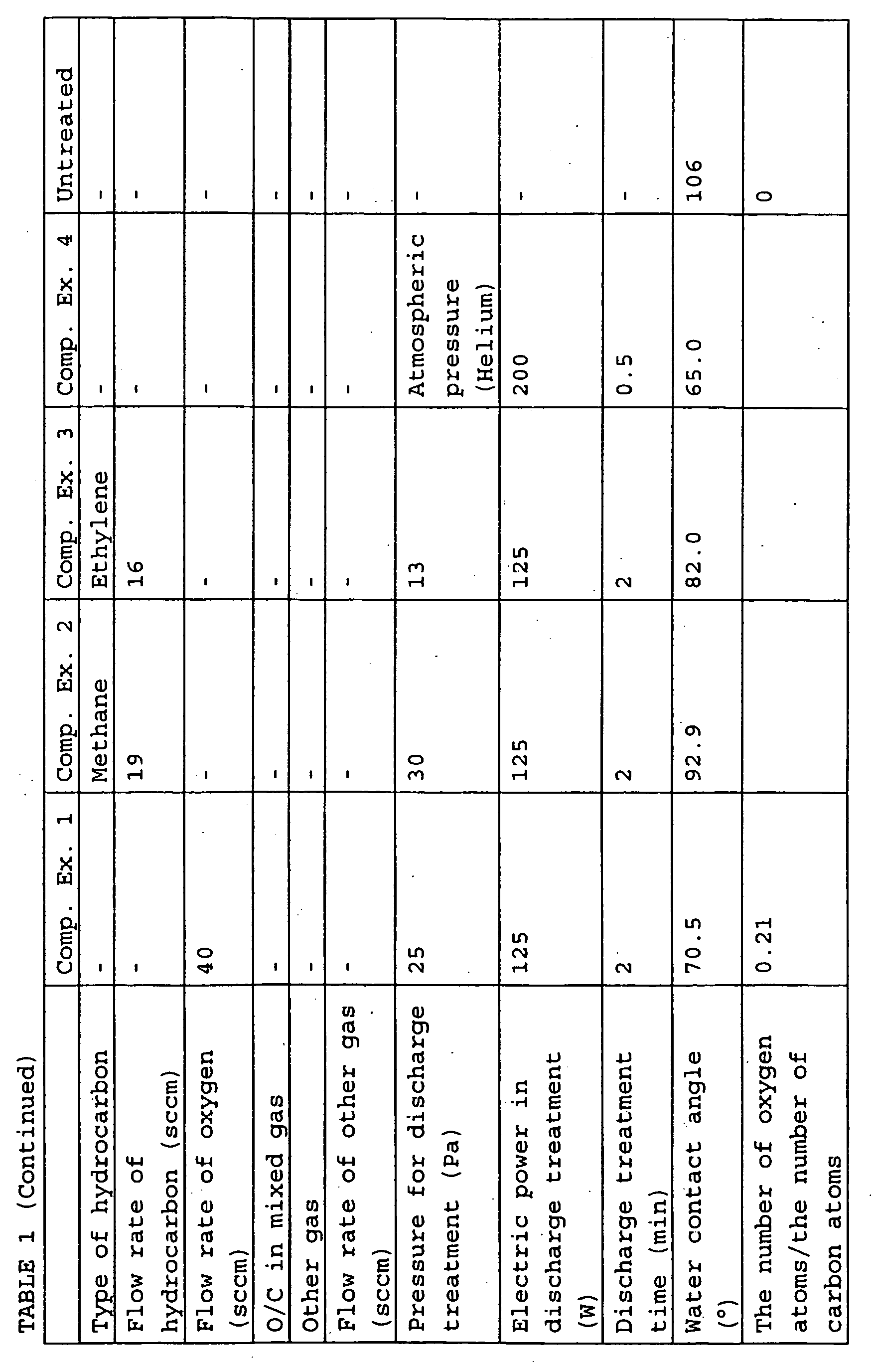

As shown in the results in Examples and Comparative Examples, when the discharge treatment was conducted in the mixed gas containing a hydrocarbon and oxygen, the water contact angle on the ETFE film surface could be made to be at most 20°. On the other hand, in Comparative Examples 1 to 3 in which the discharge treatments were conducted in an atmosphere of only a hydrocarbon or oxygen, and in Comparative Example 4 in which the discharge treatment was conducted in an atmospheric pressure, the water contact angle was remarkably high.

## Claims

1. A method for producing an ethylene/tetrafluoroethylene copolymer molding **characterized by** applying discharge treatment to a surface of a molding to be treated, under reduced pressure in a mixed gas containing oxygen and ethylene, wherein the total content of oxygen and ethylene in the mixed gas is at least 10 mol%, and wherein the discharge treatment is carried out under a pressure of at most 10⁴ Pa and the electrical power density at the time of the discharge treatment is from 0.1 to 4.0 W/cm², said surface being made of a material comprising an ethylene/tetrafluoroethylene copolymer as the main component,

2. The method for producing an ethylene/tetrafluoroethylene copolymer molding according to Claim 1, wherein the ratio of the number of oxygen atoms to the number of carbon atoms (the number of oxygen atoms/the number of carbon atoms) contained in the mixed gas, is from 0.2 to 3.0.

3. An ethylene/tetrafluoroethylene copolymer molding wherein in a surface of the ethylene/tetrafluoroethylene copolymer molding, the ratio of the number of oxygen atoms to the number of carbon atoms (the number of oxygen atoms/the number of carbon atoms) is at least 0.25 and the water contact angle is at most 10°, obtainable by the method as defined in claim 1 or 2.

4. Use of the ethylene/tetrafluoroethylene copolymer molding according to claim 3 for agriculture applications or solar batteries.

## Patentansprüche

1. Verfahren zur Herstellung einer Ethylen/Tetrafluorethylen-Copolymer-Form, **gekennzeichnet durch** Anlegen von Entladungsbehandlung auf eine Oberfläche einer zu behandelnden Form unter reduziertem Druck in einem Gasgemisch, enthaltend Sauerstoff und Ethylen, wobei der Gesamtgehalt von Sauerstoff und Ethylen in dem Gasgemisch mindestens 10 Mol-% ist, und wobei die Entladungsbehandlung unter einem Druck von höchstens 10⁴ Pa und einer elektrischen Stromdichte zu der Zeit der Entladungsbehandlung von 0,1 bis 4,0 W/cm² durchgeführt wird, wobei die Oberfläche aus einem Material ist, umfassend ein Ethylen/Tetrafluorethylen-Copolymer als die Hauptkomponente.

2. Verfahren zur Herstellung einer Ethylen/Tetrafluorethylen-Copolymer-Form gemäß Anspruch 1, wobei das Verhältnis der Anzahl an Sauerstoffatomen zu der Zahl an Kohlenstoffatomen (die Zahl an Sauerstoffatomen/die Zahl an Kohlenstoffatomen), enthalten in dem Gasgemisch, von 0,2 bis 3,0 ist.

3. Ethylen/Tetrafluorethylen-Copolymer-Form, wobei in einer Oberfläche der Ethylen/Tetrafluorethylen-Copolymer-Form das Verhältnis der Zahl an Sauerstoffatomen zu der Zahl an Kohlenstoffatomen (die Zahl an Sauerstoffatomen/die Zahl an Kohlenstoffatomen) mindestens 0,25 beträgt, und der Wasserkontaktwinkel höchstens 10° ist, erhältlich durch das Verfahren, wie in Anspruch 1 oder 2 definiert.

4. Verwendung der Ethylen/Tetrafluorethylen-Copolymer-Form gemäß Anspruch 3 für landwirtschaftliche Anwendungen oder Solarbatterien.

## Revendications

1. Procédé pour produire une pièce moulée en copolymère d'éthylène/tétrafluoroéthylène, **caractérisé par** l'application d'un traitement de décharge sur une surface d'une pièce moulée devant être traitée, sous pression réduite dans un gaz mixte contenant de l'oxygène et de l'éthylène, dans lequel la teneur totale en oxygène et en éthylène dans le gaz mixte est d'au moins 10 % en moles, et dans lequel le traitement de décharge est effectué sous une pression d'au plus 10⁴ Pa et la densité de puissance électrique au moment du traitement de décharge est de 0,1 à 4,0 W/cm², ladite surface étant constituée d'une matière comprenant un copolymère d'éthylène/tétrafluoroéthylène en tant que composant principal.

2. Procédé pour produire une pièce moulée en copolymère d'éthylène/tétrafluoroéthylène selon la revendication 1, dans lequel le rapport du nombre d'atomes d'oxygène sur le nombre d'atomes de carbone (le nombre d'atomes d'oxygène/le nombre d'atomes de carbone) dans le gaz mixte, est de 0,2 à 3,0.

3. Pièce moulée en copolymère d'éthylène/tétrafluoroéthylène dans laquelle, dans une surface de la pièce moulée en copolymère d'éthylène/tétrafluoroéthylène, le rapport du nombre d'atomes d'oxygène sur le nombre d'atomes de carbone (le nombre d'atomes d'oxygène/le nombre d'atomes de carbone) est d'au moins 0,25 et l'angle de contact avec l'eau est d'au plus 10°, pouvant être obtenue par le procédé tel que défini dans la revendication 1 ou 2.

4. Utilisation de la pièce moulée en copolymère d'éthylène/tétrafluoroéthylène selon la revendication 3 pour des applications dans l'agriculture ou pour des batteries solaires.
